# EUROPÄISCHE PATENTANMELDUNG

(11) **EP 0 594 954 A1**
(43) Veröffentlichungstag der Anmeldung: **04.05.1994**
(21) Anmeldenummer: 93112238.6
(22) Anmeldetag: 30.07.1993
(51) Int. Cl.: B62H 5/02, E05B 71/00

(54) **Schloss, insbesondere für Fahrrad oder dergleichen**

(30) Priorität: 29.10.1992 DE 9214669 U
(71) Anmelder: Smolarek, Walter, D-71083 Herrenberg (DE)
(72) Erfinder: Smolarek, Walter, D-71083 Herrenberg (DE)
(74) Vertreter: KOHLER SCHMID + PARTNER

(57) **Zusammenfassung**

Bei einem Schloß, insbesondere für ein Fahrrad (1) oder dergleichen mit einer Schließeinheit und einem Riegelmechanismus, ist der Riegelmechanismus (22-26; 32-36; 42, 44) so vorgesehen, daß er unmittelbar formschlüssig in eine Antriebskurbelwelle (17) und/oder eine Lenkwelle (13) des Fahrrads oder dergleichen lösbar eingreift. Damit wird die durch das Schloß bewirkte Sicherheit gegen Diebstahl des abgeschlossenen Gegenstands erhöht und gleichzeitig das Gewicht des Schlosses verringert.

## Beschreibung

Die Erfindung betrifft ein Schloß, insbesondere für ein Fahrrad oder dergleichen mit einer Schließeinheit und einem Riegelmechanismus.

Viele bekannte Schlösser für motorgetriebene oder fußgetriebene Fahrräder oder dergleichen bestehen aus einer Schließeinheit, die fest mit einem Gestängeteil, z. B. einer Hinterradstrebe, verbunden ist und einem in das Hinterrad eingreifenden Riegelmechanismus. Andere bekannte Schlösser sind vom Fahrrad separierbare Bügel- oder Kabelschlösser, die wahlweise um den Rahmen, Vorder- und/oder Hinterrad legbar sind.

Damit solche bekannten Schlösser mehr Sicherheit gegen Diebstahl des Fahrrads bieten, müssen ihre Riegelteile oder Bügel- bzw. Kabelteile immer stärker ausgestaltet werden, wodurch auch Zwangsläufig das Gewicht solcher Schlösser zunimmt.

Ziel der vorliegenden Erfindung ist es, ein Schloß insbesondere für ein Fahrrad oder dergleichen so zu ermöglichen, daß die durch das Schloß bewirkte Sicherheit gegen Diebstahl des Fahrrads oder dergleichen erhöht und gleichzeitig das Gewicht des Schlosses verringert ist.

Diese Aufgabe wird erfindungsgemäß durch die im Anspruch 1 angegebenen Merkmale gelöst. Die Merkmale der abhängigen Ansprüche 2 bis 14 kennzeichnen jeweils vorteilhafte Ausbildungen davon.

Dadurch daß, wie in Anspruch 1 gekennzeichnet, der Riegelmechanismus so vorgesehen ist, daß er unmittelbar formschlüssig in eine Antriebskurbelwelle und/oder eine Lenkwelle lösbar eingreift, ist sowohl der Antriebsmechanismus, wie z. B. die Tretkurbel, und gegebenenfalls außerdem der Lenker blockierbar, sodaß das Fahrrad oder dergleichen nur noch in blockiertem Zustand abtransportiert werden kann.

Bevorzugt greift der Riegelmechanismus des erfindungsgemäßen Schlosses gleichzeitig sowohl in die Antriebskurbelwelle als auch in die Lenkwelle ein.

Bei der nachfolgenden Beschreibung werden mit dem Begriff Fahrrad sowohl herkömmliche durch Pedale angetriebene Fahrräder und Dreiräder als auch Leichtmotorräder, wie Mofas und Mopeds verstanden. Um einen unmittelbaren formschlüssigen Eingriff des Riegelmechanismus in die Antriebskurbelwelle und/oder die Lenkwelle zu ermöglichen, weist die Antriebskurbelwelle und/oder die Lenkwelle eine periphere Aussparung bzw. einen Durchbruch auf, in die ein Riegelglied des Riegelmechanismus eingreift.

Eine besonders vorteilhafte, weil mechanisch und gegen Korrosion geschützte und platzsparende Anordnung des Riegelmechanismus ist gemäß Anspruch 4 dadurch ermöglicht, daß der Riegelmechanismus im Inneren eines ein Kurbelwellenlagergehäuse der Antriebskurbel und ein Lenkwellenlagergehäuse der Lenkwelle verbindenden Rahmenrohrs des Fahrrads oder dergleichen vorgesehen ist.

Alternativ kann der Riegelmechanismus auch innerhalb einer einem besonderen, insbesondere zu dem genannten Rahmenrohr parallel laufenden Rohr vorgesehen sein.

Die periphere Aussparung bzw. der Durchbruch der Lenkwelle und das darin eingreifende Riegelglied sind bevorzugt so vorgesehen, daß das gelenkte Rad in verriegeltem Zustand stark eingeschlagen ist.

Die Schließeinheit, die den Riegelmechanismus betätigt, kann ein herkömmliches, mit dem Fahrrad oder dergleichen unlösbar verbundenes Zylinderschloß sein.

Letzteres kann alternativ entweder am Kurbelwellenlagergehäuse, insbesondere in dessen axialer Richtung, oder am Lenkwellenlagergehäuse, ebenfalls in dessen axialer Richtung oder am oben erwähnten Rahmenrohr unlösbar befestigt, beispielsweise einstückig damit, vorgesehen sein.

Alternativ zu einem mechanischen, herkömmlichen Zylinderschloß kann der Riegelmechanismus auch durch eine fernsteuerbare, elektromagnetisch oder elektromotorisch arbeitende Schließeinheit betätigt werden.

Damit der Riegelmechanismus nicht unbeabsichtigt in die Antriebskurbelwelle ohne Aktion der Schließeinheit eingreifen kann, ist der Riegelmechanismus mittels Federkraft entgegen seines Eingriffs in die Antriebskurbelwelle vorgespannt.

Die entgegen der vorspannenden Federkraft erfolgende Schließaktion des Riegelmechanismus kann vorteilhaft dadurch ausgelöst und unterstützt werden, daß die Schließeinheit den Riegelmechanismus in eine definierte Schließ-Vorbereitungsstellung versetzt, bei der die Riegelglieder noch nicht in Eingriff mit der Antriebskurbelwelle und der Lenkwelle stehen und dadurch daß daraufhin eine Drehung der Lenkwelle in die Zur Verriegelung vorgesehene Position die endgültige Verriegelung bewirkt, wobei die vorspannende Federkraft durch diese Drehung der Lenkwelle überwunden wird.

In weiterer Ausgestaltung kann der Riegelmechanismus ein Hebelgestängegetriebe aufweisen. Alternativ oder zusätzlich kann der Riegelmechanismus ein Kabelseilzuggetriebe aufweisen.

Nachfolgend wird die Erfindung in mehreren Ausführungsbeispielen anhand der Zeichnung näher beschrieben. Es zeigen:
- Fig. 1: Ein herkömmliches, pedalgetriebenes Fahrrad;
- Fig. 2: ein erstes Ausführungsbeispiel eines erfindungsgemäßen Schlosses;
- Fig. 3: ein erfindungsgemäßes Schloß in einem zweiten Ausführungsbeispiel; und
- Fig. 4: eine dritte Ausführungsart eines erfindungsgemäßen Schlosses.

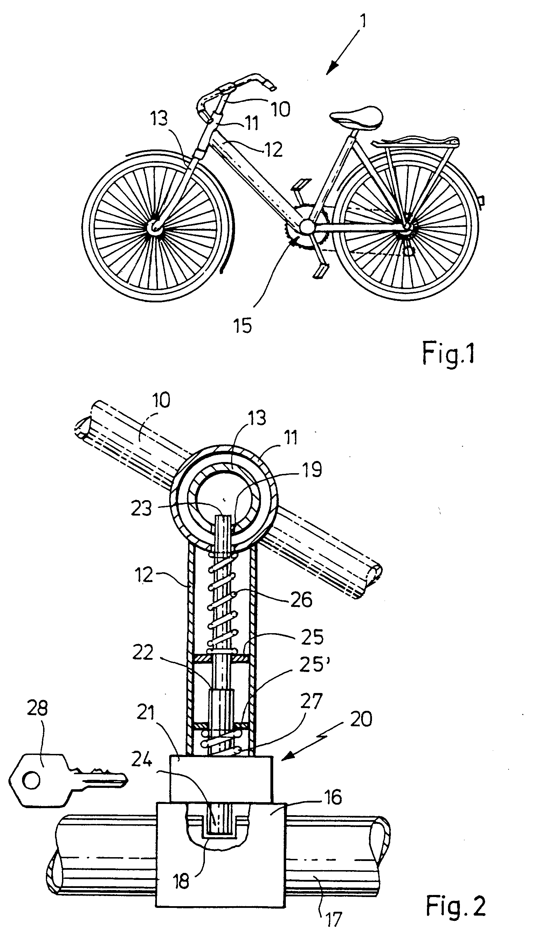

Ein in Fig. 1 dargestelltes, herkömmliches, pedalgetriebenes Fahrrad 1 weist einen Lenker 10, ein Lenkwellenlagergehäuse 11, eine Lenkwelle (Vorderrad-Gabelstrebe) 13, ein das Lenkwellenlagergehäuse 11 mit einem Kurbelwellenlagergehäuse verbindendes Rahmenrohr 12 und einen Kurbelantrieb 15 auf.

Eine erste in Fig. 2 dargestellte Ausführung eines erfindungsgemäßen Schlosses 20 weist eine Schließeinheit 21 und einen Riegelmechanismus 22 auf. Die Schließeinheit 21 ist in herkömmlicher Weise ein Zylinderschloß und kann mit einem Schlüssel 28 geöffnet oder gesperrt werden. Um ein seitliches Einführen des Schlüssels 28 in das Zylinderschloß 21 zu gestatten, ist die Zylinderachse des Zylinderschlosses 21 in axialer Richtung eines Kurbelwellenlagergehäuses 16 vorgesehen. Der in Fig. 2 schematisch dargestellte Riegelmechanismus 22 weist an entgegengesetzten Enden jeweils ein Riegelglied 23 und 24 auf. Das Riegelglied 23 greift in eine periphere Aussparung oder einen Durchbruch 19 der Lenkwelle 13 ein, welche in dem Lenkwellenlagergehäuse 11 gelagert ist. In Fig. 2 ist ersichtlich, daß der Eingriff des Riegelglieds 23 in den Durchbruch bzw. die Aussparung 19 der Lenkwelle bei schrägstehendem Lenker 10 bzw. stark eingeschlagenem Vorderrad erfolgt. Entgegengesetzt zur Eingriffsrichtung des Riegelglieds 23 greift das Riegelglied 24 formschlüssig in eine periphere Aussparung 18 der Kurbelwelle 17 ein.

Die Schließaktion der beiden Riegelglieder 23 und 24 erfolgt im wesentlichen gleichzeitig.

Der in Fig. 2 vereinfachend als Gestängegetriebe dargestellte Riegelmechanismus 22 sitzt im Inneren des Rahmenrohrs 12 und kann beispielsweise aus teleskopisch ineinander beweglichen Stangen bestehen, die durch die Schließeinheit 21 in zueinander entgegengesetzten Richtungen linear verschieblich sind. Damit die entgegengesetzt wirkenden Riegelglieder 23 und 24 nicht unbeabsichtigt in die Aussparungen 19 und 18 jeweils der Lenkwelle 13 und der Kurbelwelle 17 eingreifen können, sind die Gestängeteile dieses Riegelmechanismus 22 jeweils durch Schraubenfedern 26 und 27 entgegen ihren Eingriffsrichtungen vorgespannt. Dabei stützen sich die Schraubenfedern 26 und 27 jeweils zwischen einem Kragen 25 des inneren Gestängeteils und dem Lenkwellenlagergehäuse 11 und zwischen einem weiteren Kragen 25' des äußeren Gestängeteils und dem Kurbelwellenlagergehäuse 16 ab. Beim Schließen der Schließeinheit 21 mittels des Schlüssels 28 werden demnach die Federn 26 und 27 zusammengedrückt.

Gemäß Fig. 2 ist die Schließeinheit 21 unlösbar mit dem Kurbelwellenlagergehäuse 16 verbunden, z. B. angeschweißt oder einstückig angeformt.

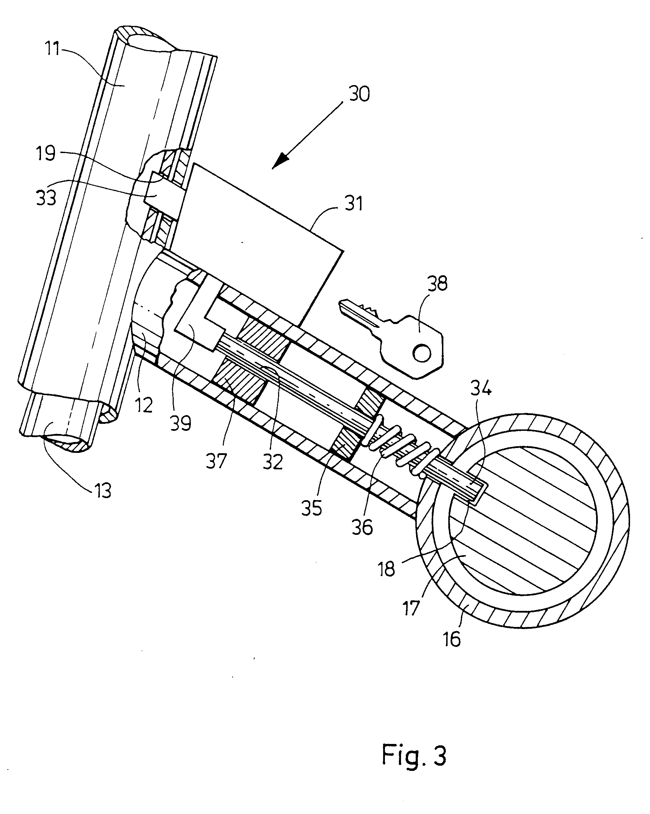

Fig. 3 stellt eine weitere Ausführungsform 30 eines erfindungsgemäßen Schlosses dar, bei dem eine Schließeinheit 31 in axialer Richtung des Rahmenrohrs 12 an diesem und am Lenkwellenlagergehäuse 11 unlösbar befestigt ist. Im Rahmenrohr 12 befindet sich der Riegelmechanismus, bestehend aus einem Gestänge 32, welches einen Kragen 35 aufweist, gegen den sich eine Schraubenfeder 36 abstützt. Die Schraubenfeder 36 ist ebenso wie in Fig. 2 dafür vorgesehen, daß das Riegelglied 34 nicht unbeabsichtigt in die Aussparung 18 der Kurbelwelle 17 eingreift. Ferner ist gezeigt, daß das Gestänge 32 in einer Führungsbüchse 37 in Längsrichtung des Rahmenrohrs 12 geführt ist. Direkt von der Schließheinheit 31 des Schlosses 30 wird die Schließaktion des anderen Riegelglieds 33, welches in die Aussparung bzw. den Durchbruch 19 in der Lenkwelle 13 eingreift, mittels des Schlüssels 38 veranlaßt. Ein Schließglied 39 bewirkt das Eingreifen des Riegelglieds 34 in die Aussparung 18 der Kurbelwelle 17.

Selbstverständlich kann die Zylinderachse des Zylinderschlosses 31 auch parallel zur Drehachse der Lenkwelle 13 ausgeführt sein, sodaß der Schlüssel 38 von oben in das Zylinderschloß 31 steckbar ist.

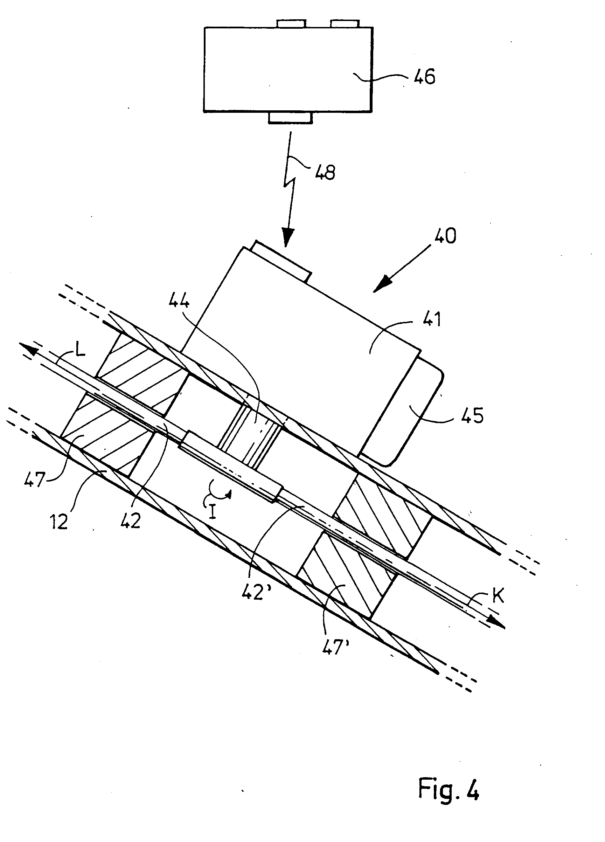

Fig. 4 zeigt eine weitere Ausführungsart 40 eines erfindungsgemäßen Schlosses, bei dem ein Riegelmechanismus, der durch zwei Stangen 42 und 42' dargestellt ist, mittels eines durch eine Fernsteuereinheit 46 beispielsweise durch Infrarotstrahlen 48 fernsteuerbaren Schließeinheit 41 betätigbar ist. Dafür kann die Schließeinheit 41 mit einer Batterie 45 ausgestattet sein und ein elektromotorisch oder elektromagnetisch arbeitendes Schließ-Öffnungs-Stellglied beinhalten. Letzteres weist ein mechanisches Schließglied 44 auf, welches im Sinne des Pfeils I gedreht wird und die beiden Stangen 42 und 42' jeweils in Richtung der Pfeile L und K in die Verriegelungsposition schiebt. Die Gestänge 42 und 42' befinden sich ebenfalls, wie bei den vorigen Ausführungsbeispielen, innerhalb des Rahmenrohrs 12 und sind dort in Führungsbüchsen 47 und 47' längsverschieblich gelagert.

Obwohl bei den dargestellten und oben beschriebenen Ausführungsbeispielen der Riegelmechanismus aus einem HebelGestängegetriebe besteht, kann der Riegelmechanismus alternativ oder zusätzlich im Innern des Rahmenrohrs auch einen Kabelseilzug aufweisen.

Damit die Vorspannkräfte der den Riegelmechanismus bzw. deren Gestänge vorspannenden Schraubenfedern 26, 27 bzw. 36 bei der Schließaktion nicht ausschließlich durch die Drehung des Schlüssels 38 im Inneren des Schließzylinders 31 überwunden werden müssen, kann der Schließzylinder bzw. die Schließeinheit bei einer definierten Schließ-Vorbereitungsstellung den Riegelmechanismus in eine Position versetzen, bei der die Riegelglieder noch nicht im Eingriff mit der Antriebskurbelwelle und der Lenkwelle stehen, wobei daraufhin durch Drehung der Lenkwelle in die zur Verriegelung vorgesehene Position die endgültige Verriegelung bewirkt wird, wobei die vorspannende Federkraft der Vorspannfedern durch diese Drehung der Lenkwelle überwunden wird.

Das vorstehend beschriebene und in den Zeichnungsfiguren dargestellte erfindungsgemäße Schloß wurde für ein gewöhnliches pedalgetriebenes Zweiradfahrrad verwendet. Dem Fachmann ist es jedoch unmittelbar einsichtig, daß das erfindungsgemäße Schloß auch bei anderen Fahrzeugen, wie Dreirädern, Mopeds, Leichmotorrädern, Krankenfahrstühlen etc. vorteilhaft einsetzbar ist.

## Patentansprüche

1. Schloß, insbesondere für ein Fahrrad (1) oder dergleichen mit einer Schließeinheit und einem Riegelmechanismus,
dadurch gekennzeichnet, daß der Riegelmechanismus (22-26; 32-36; 42, 44) so vorgesehen ist, daß er unmittelbar formschlüssig in eine Antriebskurbelwelle (17) und/oder eine Lenkwelle (13) des Fahrrads oder dergleichen lösbar eingreift.

2. Schloß nach Anspruch 1, dadurch gekennzeichnet, daß der Riegelmechanismus (22-26; 32-36; 42, 44) gleichzeitig sowohl in die Antriebskurbelwelle (17) als auch in die Lenkwelle (13) eingreift.

3. Schloß nach Anspruch 1 oder 2, dadurch gekennzeichnet, daß die Antriebskurbelwelle (17) und/oder die Lenkwelle (13) eine periphere Aussparung (18) bzw. einen Durchbruch (19) aufweisen, in die jeweils ein Riegelglied (23, 24; 33, 34; 42, 42') des Riegelmechanismus eingreift.

4. Schloß nach einem der Ansprüche 1 bis 3, dadurch gekennzeichnet, daß daß der Riegelmechanismus im Inneren eines ein Kurbelwellenlagergehäuse (16) der Antriebskurbelwelle (17) und ein Lenkwellenlagergehäuse (11) der Lenkwelle (13) verbindenden Rahmenrohrs (12) des Fahrrads (1) oder dergleichen vorgesehen ist.

5. Schloß nach einem oder mehreren der vorangehenden Ansprüche, dadurch gekennzeichnet, daß die periphere Aussparung bzw. der Durchbruch (19) der Lenkwelle (13) und das darin eingreifende Riegelglied (23; 33) so vorgesehen sind, daß das gelenkte Rad in verriegeltem Zustand schräg steht.

6. Schloß nach einem oder mehreren der vorangehenden Ansprüche, dadurch gekennzeichnet, daß der Riegelmechanismus durch ein herkömmliches, mit dem Fahrrad oder dergleichen unlösbar verbundenes Zylinderschloß (21; 31) als Schließeinheit betätigt wird.

7. Schloß nach Anspruch 6, dadurch gekennzeichnet, daß das Zylinderschloß (21) am Kurbelwellenlagergehäuse (16) vorgesehen ist.

8. Schloß nach Anspruch 6, dadurch gekennzeichnet, daß das Zylinderschloß (31) am Lenkwellenlagergehäuse vorgesehen ist.

9. Schloß nach Anspruch 6, dadurch gekennzeichnet, daß das Zylinderschloß am Rahmenrohr (12) vorgesehen ist.

10. Schloß nach einem oder mehreren der Ansprüche 1 bis 5, dadurch gekennzeichnet, daß der Riegelmechanismus (42, 42') durch eine fernsteuerbare, elektromagnetisch oder elektromotorisch arbeitende Schließeinheit (41) betätigt wird.

11. Schloß nach einem oder mehreren der vorangehenden Ansprüche, dadurch gekennzeichnet, daß der Riegelmechanismus mittels Federkraft entgegen seiner Eingriffsrichtung in die Antriebskurbelwelle (17) vorgespannt ist.

12. Schloß nach Anspruch 11, dadurch gekennzeichnet, daß die Schließeinheit (21, 31, 41) den Riegelmechanismus in eine definierte Schließ-Vorbereitungsstellung versetzt, bei der die Riegelglieder noch nicht im Eingriff mit der Antriebskurbelwelle (17) und der Lenkwelle (13) stehen, und daß daraufhin eine Drehung der Lenkwelle in die zur Verriegelung vorgesehene Position die endgültige Verriegelung bewirkt, wobei die vorspannende Federkraft durch diese Drehung der Lenkwelle (13) überwunden wird.

13. Schloß nach einem oder mehreren der vorangehenden Ansprüche, dadurch gekennzeichnet, daß der Riegelmechanismus ein Hebel-Gestängegetriebe aufweist.

14. Schloß nach einem oder mehreren der vorangehenden Ansprüche, dadurch gekennzeichnet, daß der Riegelmechanismus ein Kabelseilzuggetriebe aufweist.
